# EUROPÄISCHE PATENTANMELDUNG

(11) **EP 1 063 435 A1**
(43) Veröffentlichungstag der Anmeldung: **27.12.2000**
(21) Anmeldenummer: 00107303.0
(22) Anmeldetag: 04.04.2000
(51) Int. Cl.: F16C 13/00

(54) **Elastische Walze**

(30) Priorität: 23.06.1999 DE 19928755
(71) Anmelder: Voith Sulzer Papiertechnik Patent GmbH, 89522 Heidenheim (DE)
(72) Erfinder: Vodermayer, Albert Maria, Dr., 8305 Dietlikon (CH)
(74) Vertreter: Manitz, Finsterwald & Partner

(57) **Zusammenfassung**

Es wird eine Walze, insbesondere zum Glätten von Papierbahnen, mit einem insbesondere aus Metall bestehenden harten Walzenkern beschrieben. Der Walzenkern ist an seiner Außenseite mit einer ein elastisches Matrixmaterial umfassenden elastischen Bezugsschicht versehen, die im Betrieb bei rotierender Walze beispielsweise durch eine anpreßbare Gegenwalze bereichsweise komprimierbar ist. Das Material und/oder der Aufbau der elastischen Bezugsschicht ist so gewählt, daß im Betrieb bei einer Temperatur der Bezugsschicht von zwischen 25°C und 150°C, einer Nip-Frequenz von zwischen 0,3 und 5 Hz und einer durch die Komprimierung verursachten Amplitude der Oberfläche der elastischen Bezugsschicht von zwischen 15 und 50 µm die gesamte dissipierte Energie der Bezugsschicht kleiner als 0,9 J/cm³ insbesondere kleiner als 0,6 J/cm³ bevorzugt kleiner als 0,3 J/cm³ ist.

## Beschreibung

Die vorliegende Erfindung betrifft eine Walze, insbesondere zum Glätten von Papierbahnen, mit einem insbesondere aus Metall bestehenden harten Walzenkern, der an seiner Außenseite mit einer ein elastisches Matrixmaterial umfassenden elastischen Bezugsschicht versehen ist, die im Betrieb bei rotierender Walze beispielsweise durch eine anpreßbare Gegenwalze bereichsweise komprimierbar ist.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittlichen Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Es ist eine Aufgabe der Erfindung, eine Walze der eingangs genannten Art so auszubilden, daß die Gefahr des Auftretens von Hot-Spots verringert wird.

Diese Aufgabe wird ausgehend von einer Walze der eingangs genannten Art erfindungsgemäß dadurch gelöst, daß das Material und/oder der Aufbau der elastischen Bezugsschicht so gewählt ist, daß im Betrieb bei einer Temperatur der Bezugsschicht von zwischen 25°C und 150°C, einer Nipfrequenz - das ist die Frequenz, mit der die Bezugsschicht komprimiert und wieder entlastet wird - von zwischen 0,3 und 5 Hz und einer durch die Komprimierung verursachten Amplitude der Oberfläche der elastischen Bezugsschicht von zwischen 15 und 50 µm die gesamte dissipierte Energie der Bezugsschicht kleiner als 0,9 J/cm³, insbesondere kleiner als 0,6 J/cm³, bevorzugt kleiner als 0,3 J/cm³ ist.

Erfindungsgemäß wird somit der Hot-Spot-Bildung und damit der Zerstörung der Bezugsschicht durch eine Minimierung der im Betrieb auftretenden Dissipationsenergie entgegengewirkt. Bevorzugt werden das Material und/oder der Aufbau der elastischen Bezugsschicht dabei so gewählt, daß die angegebenen Werte der dissipierten Energie bei einer Nip-Frequenz von zwischen 0,5 und 3 Hz, insbesondere bei ca. 1 Hz, und/oder bei einer Amplitude von zwischen 20 und 40 µm, insbesondere bei ca. 30 µm, erreicht werden.

Durch die Minimierung der auftretenden Dissipationsenergie in der elastischen Bezugsschicht wird bei den angegebenen Betriebswerten erreicht, daß keine kritischen Temperaturwerte innerhalb der Bezugsschicht auftreten. Die Gefahr des Auftretens von Hot-Spots wird dadurch weitgehend eliminiert.

Nach einer vorteilhaften Ausführungsform der Erfindung wird zum Erreichen der angegebenen Werte der dissipierten Energie ein entsprechendes Matrixmaterial mit geringer Energiedissipation, insbesondere eine geeignete Harz/Härter-Kombination als Matrixmaterial verwendet. Dabei kann als Harz vorzugsweise ein hochelastisches Harz verwendet werden.

Da üblicherweise für die Bildung der elastischen Bezugsschicht verwendete Matrixmaterialien aufgrund ihres visco-elastischen Verhaltens eine relativ hohe Energiedissipation besitzen, sind nach einer bevorzugten Ausführungsform der Erfindung zum Erreichen der angegebenen Werte der dissipierten Energie in dem Matrixmaterial Füllstoffe mit geringer Energiedissipation, insbesondere Fasern und/oder pulverförmige Füllstoffe eingebettet. Bevorzugt werden hier mineralische Füllstoffe verwendet, da diese eine besonders geringe Energiedissipation besitzen.

Bevorzugt sind die Fasern als Glas- und/oder als Kohlefasern ausgebildet, um der elastischen Bezugsschicht die erforderliche Steifigkeit zu geben. Dabei können die Fasern in einer oder mehreren Faserlagen innerhalb des Matrixmaterials der elastischen Bezugsschicht angeordnet sein.

Weitere vorteilhafte Ausführungsformen der Erfindung sind in den Unteransprüchen angegeben.

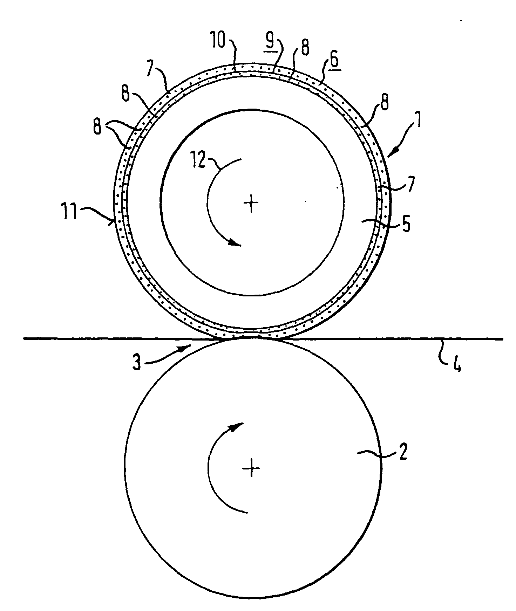

Die Erfindung wird nachfolgend anhand eines Ausführungsbeispiels unter Bezugnahme auf die einzige Figur näher beschrieben:

Die Figur zeigt einen schematischen Querschnitt durch eine erfindungsgemäß ausgebildete elastische Walze 1 die zusammen mit einer harten Walze 2 einen Preßspalt 3 bildet, durch den eine Materialbahn, beispielsweise ein Papierbahn 4 geführt ist.

Die elastische Walze 1 umfaßt einen beispielsweise aus Stahl oder Hartguß bestehenden Walzenkern 5, dessen Außenseite mit einer elastischen Bezugsschicht 6 versehen ist.

Die elastische Bezugsschicht 6 besteht aus einem elastischen Matrixmaterial 7, in das Füllstoffe 8 sowie in Faserlagen 9 angeordnete Fasern 10 eingebettet sind, wobei in der Figur aus Darstellungsgründen nur eine Faserlage 9 gezeigt ist. Üblicherweise sind nicht nur eine, sondern einer Vielzahl, beispielsweise 10 bis 40 Faserlagen 9 in dem Matrixmaterial 7 eingebettet. Diese können beispielsweise durch Wickeln von Faserbündeln oder Faserrovings auf den Walzenkern 1 erzeugt werden, wobei die Faserbündel bzw. Faserrovings insbesondere vor dem Aufwickeln auf den Walzenkern 1 durch ein Matrixbad gezogen werden können.

Wie aus der Figur zu erkennen ist, wird die elastische Bezugsschicht 6 im Preßspalt 3 durch die harte Walze 2 komprimiert, so daß die Oberfläche 11 der elastischen Bezugsschicht 6 im Preßspalt 3 bei einer Rotation der elastischen Walze 1 in Pfeilrichtung 12 über ihren Umfang periodisch eingedrückt wird.

Erfindungsgemäß sind das Material und/oder der Aufbau der elastischen Bezugsschicht 6 so gewählt, daß bei einer Nip-Frequenz - das ist die Frequenz, mit der die Bezugsschicht komprimiert und wieder entlastet wird - von zwischen 0,3 und 5 Hz und einer durch die Komprimierung verursachten Amplitude der Oberfläche der elastischen Bezugsschicht 6 von zwischen 15 und 50 µm die gesamte dissipierte Energie der Bezugsschicht 6 bevorzugt kleiner als 0,3 J/cm³ ist. Dies wird durch die in den Ansprüchen sowie der Beschreibung angegebenen Maßnahmen erreicht.

Durch die erfindungsgemäße Minimierung der Dissipationsenergie wird somit die Gefahr einer Überhitzung der elastischen Bezugsschicht 6 im Betrieb deutlich verringert, so daß die Gefahr des Auftretens von Hot-Spots ebenfalls verringert wird.

### Bezugszeichenliste

- 1: elastische Walze
- 2: harte Walze
- 3: Preßspalt
- 4: Papierbahn
- 5: Walzenkern
- 6: elastische Bezugsschicht
- 7: Matrixmaterial
- 8: Füllstoffe
- 9: Faserlage
- 10: Fasern
- 11: Oberfläche

## Patentansprüche

1. Walze, insbesondere zum Glätten von Papierbahnen (4), mit einem insbesondere aus Metall bestehenden harten Walzenkern (5), der an seiner Außenseite mit einer ein elastisches Matrixmaterial (7) umfassenden elastischen Bezugsschicht (6) versehen ist, die im Betrieb bei rotierender Walze (1) beispielsweise durch eine anpreßbare Gegenwalze (2) bereichsweise komprimierbar ist,
**dadurch gekennzeichnet,**
daß das Material (7, 8, 9, 10) und/oder der Aufbau der elastischen Bezugsschicht (6) so gewählt ist, daß im Betrieb bei einer Temperatur der Bezugsschicht (6) von zwischen 25°C und 150°C, einer Nipfrequenz - das ist die Frequenz, mit der die Bezugsschicht (6) komprimiert und wieder entlastet wird - von zwischen 0,3 und 5 Hz und einer durch die Komprimierung verursachten Amplitude der Oberfläche (11) der elastischen Bezugsschicht (6) von zwischen 15 und 50 µm die gesamte dissipierte Energie der Bezugsschicht (6) kleiner als 0,9 J/cm³, insbesondere kleiner als 0,6 J/cm³, bevorzugt kleiner als 0,3 J/cm³ ist.

2. Walze nach Anspruch 1,
**dadurch gekennzeichnet,**
daß die Werte der dissipierten Energie bei einer Nipfrequenz von zwischen 0,5 und 3 Hz, insbesondere bei ca. 1 Hz erreicht werden.

3. Walze nach Anspruch 1 oder 2,
**dadurch gekennzeichnet,**
daß die Werte der dissipierten Energie bei einer Amplitude von zwischen 20 und 40 µm, insbesondere bei ca. 30 µm erreicht werden.

4. Walze nach einem der vorhergehenden Ansprüche,
**dadurch gekennzeichnet,**
daß zum Erreichen der angegebenen Werte der dissipierten Energie ein entsprechendes Matrixmaterial (7) mit geringer Energiedissipation, insbesondere eine geeignete Harz/Härter-Kombination als Matrixmaterial (7) verwendet wird.

5. Walze nach Anspruch 4,
**dadurch gekennzeichnet,**
daß das Harz ein hochelastisches Harz ist.

6. Walze nach einem der vorhergehenden Ansprüche,
**dadurch gekennzeichnet,**
daß das Matrixmaterial (7) ein Kunststoff, insbesondere ein Duroplast oder ein Thermoplast ist.

7. Walze nach einem der vorhergehenden Ansprüche,
**dadurch gekennzeichnet**,
daß zum Erreichen der angegebenen Werte der dissipierten Energie Füllstoffe (8, 10) mit geringer Energiedissipation, insbesondere Fasern (10) und/oder pulverförmige Füllstoffe (8) in dem Matrixmaterial (7) eingebettet sind.

8. Walze nach Anspruch 7,
**dadurch gekennzeichnet,**
daß die Füllstoffe (8, 10) mineralische Füllstoffe sind.

9. Walze nach Anspruch 7,
**dadurch gekennzeichnet,**
daß die Fasern (10) als Glas- und/oder als Kohlefasern ausgebildet sind.

10. Walze nach einem der Ansprüche 7 bis 9,
**dadurch gekennzeichnet,**
daß in dem Matrixmaterial (7) der elastischen Bezugsschicht (7) eine oder mehrere Faserlagen (9) eingebettet sind.
